# EUROPÄISCHE PATENTANMELDUNG

(11) **EP 4 285 713 A1**
(43) Veröffentlichungstag der Anmeldung: **06.12.2023**
(21) Anmeldenummer: 23176327.7
(22) Anmeldetag: 31.05.2023
(51) Int. Cl.: A01G 13/02

(54) **WURZELSCHUTZHÜLLE**

(30) Priorität: 31.05.2022 DE 102022113773
(71) Anmelder: SPC Sunflower Plastic Compound GmbH, 49681 Garrel (DE)
(72) Erfinder: Wingerath, Judith, 49080 Osnabrück (DE); Albers, Stephan, 49413 Dinklage (DE)
(74) Vertreter: Eisenführ Speiser

(57) **Zusammenfassung**

Die vorliegende Erfindung betrifft eine Wurzelschutzhülle (1) mit einem im Wesentlichen kreisförmigen, ovalen, rechteckigen, quadratischen oder mehreckigen Querschnitt, wobei die Hülle (1) eine Rohrstruktur und Länge von mehr als 5 cm und die Hülle eine Wand mit einer vorbestimmten Wandstärke aufweist, welcher im Bereich von im Wesentlichen bei 0,3 mm - 5 mm liegt, vorzugsweise im Bereich von 1 mm - 3 mm, wobei das Material der Wurzelschutzhülle (1) aus einem home- bzw. erdabbaubarem Kunststoff besteht, der gegebenenfalls einen vorbestimmten Anteil von Naturfasern, vorzugsweise Sonnenblumenschalenfasern enthält, wobei dieser Anteil der Naturfasern am Gesamtanteil bevorzugt höher ist als 10%, z. B. 10 % - 70 %.

## Beschreibung

Die Erfindung betrifft eine Wurzelschutzhülle, ein Verfahren zur Herstellung einer solchen Wurzelschutzhülle, wie auch ein Gebinde aus einer vorbestimmten Anzahl von Wurzelschutzhüllen.

Es sind bereits viele Verfahren bekannt, um ein Forstpflanzgut auszusäen und zu einem Jungbaum zu ziehen und dann auf einer Forstfläche zu verpflanzen, um dann auf einer Fläche eine Forstkultur mit der gewünschten Baumzusammensetzung zu begründen.

Außer der Verpflanzung mittels Menschen oder Maschinen gibt es auch die Naturverjüngung, bei welcher das im Forstraum befindliche natürliche Saatgut auflaufen kann, um dann eine Neuanpflanzung zu bilden, bei welcher später durch Selektion die gewünschten Baumarten und auch die gewünschten Bäume übrig bleiben.

Die klassische Aufforstung stößt immer wieder an ihre Grenzen, sei es, dass durch Wetterbedingungen, z. B. Hitze, Trockenheit, Frost, zu viel Nässe etc., die gepflanzten Jungbäume beschädigt werden oder gar eingehen, oder durch Wildverbiss (Rehbock, Damhirsch etc.) oder andere Einflüsse (Insekten, Schnecken, Verschattung, Pilze etc.) das Pflanzgut beschädigt wird oder eingeht.

Der Wunsch nach der Neubegründung von Mischwald stößt dann oftmals auch an bestimmte Grenzen, weil die verschiedenen Baumarten des Mischwaldes einen unterschiedlichen Wachstumsanspruch haben, welches bereits durch die Ausbildung der Wurzeln vorbestimmt ist, so gibt es Tiefwurzler, Flachwurzler, Herzwurzler und je nachdem, wie gut die Nährstoff- und die Wasserversorgung auf der Fläche ist, die neu bepflanzt werden soll,hat mal die eine und mal die andere Art einen bestimmten Vorteil, sich im Wachstum gegenüber der anderen -jedenfalls zu Beginn der Kulturphase - durchzusetzen.

Für die Forstbepflanzung wird bislang in Forstbaumschulen das entsprechende Pflanzgut hergestellt ("gezogen"), je nach Einsatz und Baumauswahl muss das Pflanzgut zwischen einem halben Jahr und mehreren Jahren vorkultiviert werden.

Bei dieser Vorkultivierung entwickelt sich der Samen oder Keim des Forstpflanzguts unter kontrollierten und meistens sehr optimierten Konditionen, wobei während dieser "Schulzeit" die üblichen Risiken wie Vertrocknung, zu viel Nässe, Schäden am Samen/Keim/Jungpflanzgut durch Vögel, Säugetiere, Schnecken, Insekten etc. weitgehend ausgeschlossen werden.

Mithin wird versucht, von dem Saatgut, welches bei etlichen Baumarten nicht in jedem Jahr, sondern nur in sehr guten Mastjahren anfällt, so viel wie möglich Jungbäume heranzuziehen, die dann später verpflanzt werden können.

Bei der bekannten Vorkultivierung wird dabei darauf geachtet, dass sich die Wurzel in ihrem gewünschten Wurzelbild möglichst gut entwickeln kann, z. B. bei einer Eiche oder einer Nuss eine Pfahlwurzel, sodas die Pflanze bei der späteren Verpflanzung idealerweise ohne bedeutende Wurzelverletzung eingepflanzt werden kann und sogleich auch Anschluss an feuchte Bodenschichten erhält, um somit den Wirkungsgrad der Bepflanzung möglichst hoch zu halten, denn insbesondere Pfahlwurzler bestimmter Baumarten sind oftmals gegen Trockenheit zu Beginn der Entwicklung sehr empfindlich, oftmals können Trockenschäden zu Beginn der Entwicklung eines Jungbaums nicht mehr korrigiert werden, was zu einem schlechten Wachstum (wenn überhaupt) oder zum weitgehenden bis vollständigen Ausfall der Bepflanzung führt.

Gerade vor dem Hintergrund der allgemeinen Klimaerwärmung, insbesondere aber der Trockenheit der Jahre 2018, 2019, 2020, gepaart mit einem besonderen Käferbefall (insbesondere Borkenkäferschäden) sind in Deutschland mehr als 300.000 Hektar Wald, in Europa weit mehr als 1 Millionen Hektar Wald stark beschädigt oder gar völlig abgestorben, kahl, was den Bedarf an Nachpflanzungen und insbesondere den Bedarf an Jungpflanzen erheblich gegenüber den Vorjahren erhöht hat, was zur Folge hat, dass man jetzt noch mehr darauf angewiesen ist, dass eine durchgeführte Bepflanzung möglichst erfolgreich ist, das heißt, dass von den eingepflanzten Bäumen möglichst wenig, bestenfalls keine, ausfallen, weil kaum mehr ausreichend Pflanzgut für eine potentielle Nachbepflanzung zur Verfügung steht.

Es ist bei der Standardbepflanzung bekannt, dass bei wurzelnackter Ware, vor der Verpflanzung regelmäßig der Wurzelbereich, insbesondere die Zweigwurzeln, beschnitten/gekappt wird, auch ist bekannt, vorkultivierte Containerpflanzen einzusetzen. Dabei wird auf einer Palette bei einem Container (mit Pflanzmulden) aus Kunststoff ein Substrat eingefüllt und in dieses Substrat das Saatgut oder der Keim gelegt, sodass sich dieser entwickeln kann. Bei dieser Art der Bepflanzung sind die Paletten wiederverwendbar und die Container, beispielsweise aus einem im Wesentlichen rechteckigen oder quadratischen Querschnitt bestehend aus Kunststoff, z. B. Polypropylen, Polyethylen oder dergleichen.

Das Pflanzgut wird in der Anpflanzphase ständig mit Feuchtigkeit versorgt, erfährt also unter idealen Umweltbedingungen eine möglichst optimale Anpflanzung und das Pflanzgut wird direkt vor der Verpflanzung dann aus der "Container-Pflanzmulde", in der es gewachsen ist, herausgenommen und manuell oder maschinell in der bekannten Weise verpflanzt.

Dabei ist, wie bei der Verpflanzung von wurzelnackter Ware, es nie zu vermeiden, dass die Jungpflanze eine Art Pflanzschock erfährt, weil sie innerhalb kurzer Zeit aus ihrer idealen und angewöhnten Umgebung herausgenommen wird, um dann in einen Waldboden gepflanzt zu werden, der von seiner Zusammensetzung, sei es die Bodenart, Feuchtigkeit, Säuregehalt, pH-Wert, mikrobiologische Umgebung in allen Kriterien ganz anders ist als die Umgebung, in der die Jungpflanze bis dahin vorkultiviert worden ist.

Auch durch einen solchen Pflanzschock kann die Jungpflanze geschädigt werden oder gar ganz ausfallen, weil sie es nicht schafft, sich mit den neuen Umgebungsbedingungen schnell genug anzupassen (assimilieren).

Aufgabe der vorliegenden Erfindung ist es nun, ein Werkzeug herzustellen, mit dem Plastikmüll vermieden wird und das Anwachsen der Jungpflanzen einfach möglich ist, die Wachstumsbedingungen in der jungen Pflanzphase optimiert werden und Trockenschäden und Ausfälle wegen Trockenheit nach Pflanzung möglichst vermieden werden und auch die Beschädigung und der Ausfall durch den Pflanzschock möglichst vermieden oder wenigstens vermindert wird.

Erfindungsgemäß wird eine Wurzelschutzhülle mit den Merkmalen des Anspruchs 1 vorgeschlagen. Vorteilhafte Weiterbildungen werden in den Unteransprüchen beschrieben, wie auch ein Verfahren bei Vorkultivierung von Forstgehölzen mittels der erfindungsgemäßen Wurzelschutzhülle, wie auch ein Gebinde aus einer vorbestimmten Anzahl aus Wurzelschutzhüllen.

Die erfindungsgemäße Wurzelschutzhülle besteht aus einem Rohr mit einem kreisförmigen, ovalen, rechteckigen, quadratischen oder mehreckigen Querschnitt. Die Hülle ist mehr als 5 cm lang und weist eine Gesamtlänge auf, die an das Tiefenwachstum der Wurzel angepasst ist, z. B. 40 - 50 cm oder mehr.

Die Wandung der Wurzelschutzhülle (bzw. des Rohrs der Wurzelschutzhülle) weist eine vorbestimmte Wandstärke auf und das Material der Wurzelschutzhülle besteht aus einem home- bzw. erdabbaubarem Kunststoff, der einen vorbestimmten Anteil an Naturfasern enthalten kann, vorzugsweise Sonnenblumenschalenfasern, wobei dieser Anteil der Naturfasern bzw. vorzugsweise Sonnenblumenschalenfasern am Gesamtanteil des Gesamtmaterials höher ist als 10%, z. B. 30 % - 70 %.

Je nachdem, welche Haltbarkeit das Material der Wurzelschutzhülle aufweisen soll, wie schnell der biologische Abbau bei der Kompostierung ablaufen soll und je nachdem, wann in die Wurzelschutzhülle ein wasserspeicherndes Substrat und auch das Pflanzensaatkorn in das Substrat eingebracht wurde, ist es möglich, die gewünschte Haltbarkeit, im Bereich zwischen 3 Monaten und 6 Jahren, durch verschiedene Maßnahmen einzustellen.

Eine dieser Maßnahmen ist zum Beispiel die Ausbildung der Wandstärke. Je dicker die Wandstärke ist, umso länger ist die Haltbarkeit bzw. die Struktur und Haltbarkeit der Wurzelschutzhülle gegeben, weil es mit einer dickeren Wandstärke länger braucht, bis das Material abgebaut (kompostiert) wird.

Eine andere Maßnahme zur Erhöhung der Haltbarkeit der Wurzelschutzhülle ist der Zusatz von Stabilisatoren, Füllstoffen, die die Abbaubarkeit des Materials insgesamt verzögern.

Ein typischer dem Material der Wurzelschutzhülle zugesetzter Stabilisator könnte dabei ein UV-Stabilisator sein, z. B. ein HALS-Material (Hindered Amine Light Stabilizers), oder ein UV-Absorber, oder ein Additiv, welches grundsätzlich biologisch gut abbaubar ist, aber die Abbaurate des Gesamtmaterials verzögert, z. B. Hydrolysestabilisatoren.

Eine weitere Möglichkeit (auch in Ergänzung zu dem bisher genannten Material) besteht darin, dass das Material der Wurzelschutzhülle ein Verbundmaterial aus PBS und PBSA und/oder PBAT ist und durch das Verhältnis zu PBSA und/oder PBAT die Home-Kompostierbarkeit beschleunigt wird - dann ist die Wurzelschutzhülle weniger lang haltbar - oder verzögert wird - dann ist die Wurzelschutzhülle im Erdreich länger haltbar. Soweit reines PBSA-Material oder ein Blend aus PBS und PBSA und/oder PBAT eingesetzt wird, ist dies ein abbaubarer Kunststoff, der home-kompostierbar ist und vor allem auch erdabbaubar, das heißt ein Kunststoff, welcher bei einem längeren Aufenthalt in der Erde durch einen rein biologischen Prozess und der Anwesenheit von Mikro-Organismen und/oder einem chemisch-biologischem Prozess vollständig und rückstandsfrei im Erdboden abgebaut wird.

Bei diesem Abbau des Kunststoffes werden die Einzelbestandteile unter Umständen auch der Pflanze als Nährstoff zugeführt, was deren Entwicklung, Vitalität und deren Wachstum fördern kann, insbesondere, wenn in dem Kunststoff noch Naturfasern, z. B. Sonnenblumenschalenfasern eingebettet sind.

Wenn die Wurzelschutzhülle als Endlosrohr hergestellt wird, ist es auch möglich, von der Wurzelschutzhülle die gewünschte Länge abzuschneiden, sodass die Anpassung an die gewünschte Länge der Wurzelschutzhülle jederzeit leicht möglich ist.

Es ist auch möglich, dass die Wurzelschutzhülle über ihre Länge oder Umfang eine ungleiche Wandstärke aufweist, z. B. nach unten hin eine geringere Wandstärke aufweist als nach oben hin oder umgekehrt, um somit dem bildenden Wurzelwerk der Jungpflanze die Möglichkeit zu geben, schneller durch die Wandung der Wurzelschutzhülle zu dringen.

Es ist auch möglich, dass die Wandung der Wurzelschutzhülle Öffnungen wie Löcher, und/oder bevorzugt Schlitze oder Sollbruchstellen, mit einer vorbestimmten Geometrie aufweist, um das Herauswachsen des Wurzelwerks aus der Wurzelschutzhülle schneller möglich zu machen.

Soweit dies für das weitere Verständnis notwendig ist, insbesondere bezüglich des Verbundes von Polybutylensuccinat (PBS) und Polybutylensuccinat-Co-Adipat (PBSA) wird der Inhalt der Patentanmeldung WO 2020/201094 zum Inhalt der vorliegenden Anmeldung gemacht. Statt eines Blends aus PBS/PBSA ist es auch vorteilhaft, ein Blend aus PBS und/oder PBAT (Polybutylenadipat-Terephthalat) einzusetzen. PBAT ist ein biologisch aubbaubares und kompostierbares Co-Polymer aus der Gruppe der Polyester und durch ein Blend von PBAT mit PBS, unter Umständen auch unter Zusatz von Stärke kann eine hinreichende Struktur für die Wurzelschutzhülle, eine Mulchplatte oder einen Wildverbissschutz ausgebildet werden, wie es hinsichtlich seiner Kompostierbarkeit und somit der Haltbarkeit auf die gewünschte zeitliche Länge, z. B. mehr als 3 Monate und weniger als 6 Jahre, vorzugsweise 1 bis 2 Jahre, einstellbar ist, was dann durch die Zusammensetzung aus PBS und PBAT und der weiteren Zusätze wie z. B. Stärke, UV-Stabilisatoren, Additive, Naturfasermaterial etc. erfolgt und wobei auch durch den Zusatz von Stärke, Naturfasermaterial und anderen Zusätzen, der Preis pro Kilogramm des Materials auch reduziert werden kann.

Insbesondere ein Kunststoff-Compound aus einem PBS und PBSA in den aus WO 2020/201094 bekannten Zusammensetzungen/Mischungsverhältnissen ist home-kompostierbar (TÜV-geprüft). Mit der Naturfaser kann aber das Material hinsichtlich seiner Struktureigenschaften, E-Modul, Schlagzähigkeit etc., aber auch hinsichtlich der Abbaurate, also der Kompostierfähigkeit in eine gewünschte Richtung verändert werden.

Die Haltbarkeit der erfindungsgemäßen Wurzelschutzhülle kann auch eingestellt/gesteuert werden durch die Auswahl des eingesetzten Naturfasermaterials. So wird durch den Einsatz eines Naturfasermaterials, welches sich schneller abbaut als ein anderes Naturfasermaterial, die Abbaubarkeit im Material in dem Erdreich erhöht und damit die Haltbarkeit der Wurzelschutzhülle verringert.

Sonnenblumenschalenfasern beispielsweise haben eine Abbaugeschwindigkeit im Erdreich, die deutlich länger ist als die von Naturfasern, die aus Blättern und/oder Stengeln gebildet werden, z. B. Gersten- oder Weizenstroh.

Die erfindungsgemäße Wurzelschutzhülle erlaubt darüber hinaus eine voll-automatisierte Pflanzung im Wald, was bei wurzelnackter Ware, die aus Containern herausgezogen werden muss, bislang so nicht möglich ist. Mittels der erfindungsgemäßen Wurzelschutzhüllen erhöht sich die Anwachswahrscheinlichkeit und der Anpflanzerfolg um ein Vielfaches gegenüber der Verpflanzung von wurzelnackter Ware und durch den Einsatz bestimmter Dünger wie auch durch den Wasservorrat im Substrat in der Wurzelschutzhülle lässt sich der Anwachserfolg 10 - 90 % über bisherige Pflanzungen wurzelnackter Ware oder Containerware steigern.

Dabei wird vollständig auf konventionelles Plastik, z. B. PP, PE, PET, PVC etc. im Wald verzichtet und es fallen auch, wie bei der Pflanzung mit der Containerware, keine Pflanzcontainer an, die in großen Mengen zur Verpflanzung herumliegen und erst einmal gesammelt werden müssen und es müssen auch keine kaputten Pflanzcontainer entsorgt werden.

Das Material, aus dem die Pflanzcontainer bislang gespritzt werden ist ein HDPE oder PE (Polyethylen), welches einen Preis aufweist der geringer ist als der Preis für das Material der erfindungsgemäßen Wurzelschutzhülle, wobei dieser Preisnachteil allerdings durch den höheren Anpflanzerfolg die höhere Gesamtperformance der Verpflanzung mittels Wurzelschutzhülle mehr als kompensiert wird.

Die Erfindung ist nachstehend anhand von Figuren näher erläutert.

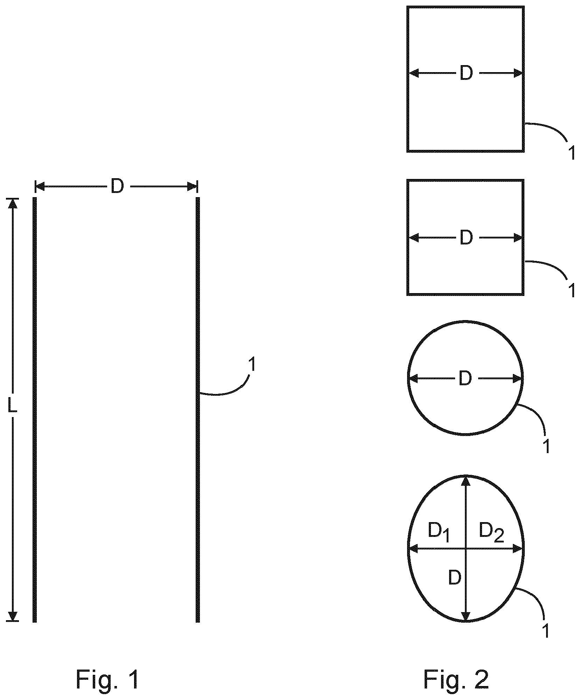

Figur 1 zeigt eine Wurzelschutzhülle 1, welche bevorzugt nach oben und unten hin offen ist und somit eine Rohrstruktur bildet.

Der Querschnitt der in Figur 1 dargestellten Wurzelschutzhülle 1 kann, wie in Figur 2 dargestellt, rechteckig (a), quadratisch (b), im wesentlichen kreisförmig (c) oder oval (d), oder auch eckig (3-eckig, 5-eckig, 6-eckig etc.)oder eine andere gewünschte Geometrie aufweisen.

Der Durchmesser D der Wurzelschutzhülle 1 ist dabei jeweils auf das Pflanzgut angepasst, das heißt, das Pflanzgut, welches ein größeres Breiten-Wachstum im Wurzelballen aufweist, wird mit einer Wurzelschutzhülle vorgezogen, die ein größeres Durchmesser aufweist als das Pflanzgut, welches ein geringeres Breitenwachstum des Wurzelballens aufweist.

Die Länge L der Wurzelschutzhülle 1, also des in Figur 1 dargestellten Rohrs ist der jeweiligen Wurzelbildung des Pflanzguts angepasst, das heißt, dass die Wurzelschutzhülle für ein Pflanzgut, wie z. B. Eiche, Nuss, welche eine Pfahlwurzel ausbilden, länger ist als das Pflanzgut, welches eher eine Flachwurzel (Flachwurzler) ausbildet, z. B. Fichte etc..

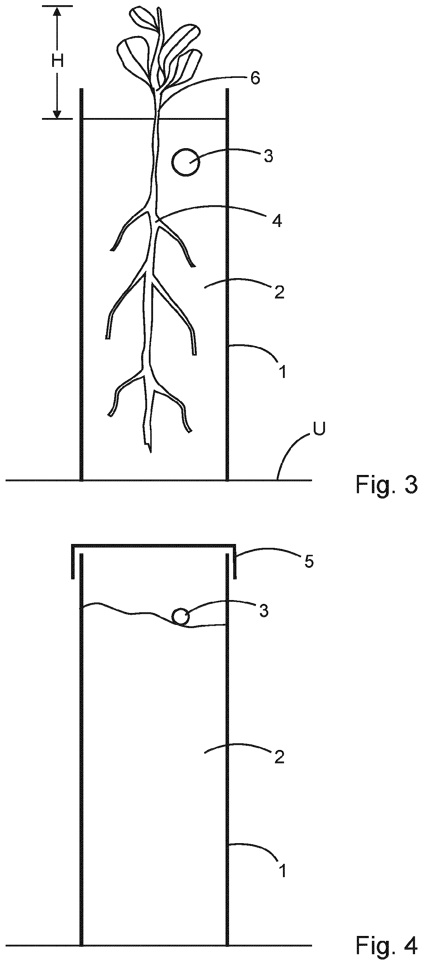

Zur Vorkultivierung wird das Rohr 1 der Wurzelschutzhülle gemäß Figur 1 zunächst auf einen Untergrund U gestellt - siehe Figur 3 - und dann mit einem gewünschten Substrat 2 gefüllt.

Der Füllungsgrad, wie auch die Auswahl des Substrats wird dabei an das Pflanzgut selbst angepasst, damit dieses optimal keimt und möglichst schnell ein substantielles Wurzelwachstum entwickelt.

Typische eingesetzte Substrate sind Torfmoose, Gartentorf, Mischungen davon, wie auch verschiedene Mischungen aus verschiedenen Erden mit aufgelockerten Strukturen, die ein schnelles Wurzelwachstum erlauben und Feuchtigkeit speichern können.

Der Gehölzkeim bzw. das Pflanzengutsaatkorn 3 wird in einer vorbestimmten idealen Tiefe unterhalb der Oberfläche des Substrats 2 eingebracht, oder auf dieses Substrat aufgelegt, je nachdem, welche Art von Baumsaatgut eingebracht wird.

Vorzugsweise ist das Saatgut vorbehandelt, z. B. stratifiziert (Kältebehandlung), oder eine durch eine andere Art und Weise vorbehandelt, um die Keimung der Aussaat zu beschleunigen, um möglichst die Fortliegezeit des Saatguts zu verkürzen und das Auflaufen der Jungpflanze zu beschleunigen.

Es ist auch möglich, wenn dies der Keimung dient, nach dem Einbringen des Saatkorns auf oder in das Substrat zunächst die Vorderseite der Wurzelschutzhülle mit einer Kappe 5 zu verdecken (Fig. 4). Dies kann dann besonders vorteilhaft sein, wenn das Saatgut zur Keimung bzw. zur Auslösung des Keimreizes, Dunkelheit für eine bestimmte Zeit benötigt.

Sobald das Saatgut aufläuft, entwickelt sich die Wurzel 4 und oberhalb des Substrats befindet sich der sichtbare Teil der Pflanze 6 (Stengel, Blätter, Stamm) und wächst hoch.

Die Verpflanzung der Jungpflanze 6, zusammen mit der Wurzelschutzhülle 1 und des Substrats 2 hängt dann von der jeweiligen Jahreszeit und der Höhe H der Pflanze oberhalb des Substrats, wie auch der Ausbildung der Wurzel ab, wobei bei der Bepflanzung des Pflanzguts zusammen mit der Wurzelschutzhülle idealerweise der sichtbare Pflanzteil oberhalb des Substrats so groß sein sollte, dass er durch Begleitgrün am Bepflanzungsort nicht sogleich bedrängt und verschattet werden kann. Ideal sind 50 - 70 und mehr Zentimeter.

Durch die Verpflanzung am Forstort zusammen mit der home-kompostierbaren bzw. auch erdabbaubaren Wurzelschutzhülle und dem Substrat darin erfährt das Pflanzgut zunächst ideale Startbedingungen, weil die im Substrat und damit in der Wurzelschutzhülle bestehende Feuchtigkeit der Pflanze weiterhin zur Verfügung steht und auch die Feuchtigkeit von unten her in das Innere der Wurzelschutzhülle eindringen kann.

Zur Verbesserung des Eindringens von Feuchtigkeit von außen in die Wurzelschutzhülle können Öffnungen, z. B. Bohrungen in der vorbestimmten Zahl mit einem vorbestimmten Durchmesser und/oder Schlitze in einer vorbestimmten Zahl und einer vorbestimmten Länge an der Wurzelschutzhülle angebracht werden, was gleichermaßen auch den Vorteil hat, dass sich das dann entwickelnde Wurzelwerk noch rascher aus der Wurzelschutzhülle durch die Wandung in das umgebende Erdreich hineinwachsen kann.

Ein weiterer Vorteil besteht darin, dass nach der Verpflanzung das umgebende Erdreich nicht sofort in Kontakt mit den empfindlichen Wurzeln innerhalb der Wurzelschutzhülle kommt und somit ein unmittelbarer Pflanzschock vermieden wird.

Durch das langsame Wachsen der Wurzeln dringen diese dann erst nach und nach in das umgebende Erdreich vor und der gesamte Übergang erfolgt so langsam, dass ein plötzlicher Pflanzschock und die entsprechenden Schäden hieraus vermieden werden können.

Selbstverständlich ist es auch möglich, in die Wurzelschutzhülle, nämlich in das Substrat vor der Verpflanzung noch einen Dünger und/oder ein Pflanzenschutzmittel einer bevorzugten Ausprägung einzubringen, um den gewünschten Pflanzerfolg zu erreichen.

Die in den Figuren gezeigte Wurzelschutzhülle 1 hat zunächst einmal ihren vorbestimmten Querschnitt, wie zum Beispiel in Figur 2 dargestellt.

Durch diese Hülle gebildete Rohrstruktur ist aber nicht extrem starr, sondern noch beweglich, das heißt, dass bei Einbringen der Wurzelschutzhülle 1 zusammen mit der aufgelaufenen Jungpflanze es nicht unbedingt notwendig ist, dass das in den Erdboden eingelassene Loch exakt dem Querschnitt der Wurzelschutzhülle 1 entsprechen muss.

Beim Einbringen der Wurzelschutzhülle 1 mit dem Pflanzgut 6 in den Erdboden am Forstort ist die Wurzelschutzhülle 1, also ihre Rohrstruktur, noch so flexibel, dass noch eine Verformung der Hüllen und eine Anpassung an das Pflanzloch im Erdboden ohne weiteres möglich ist.

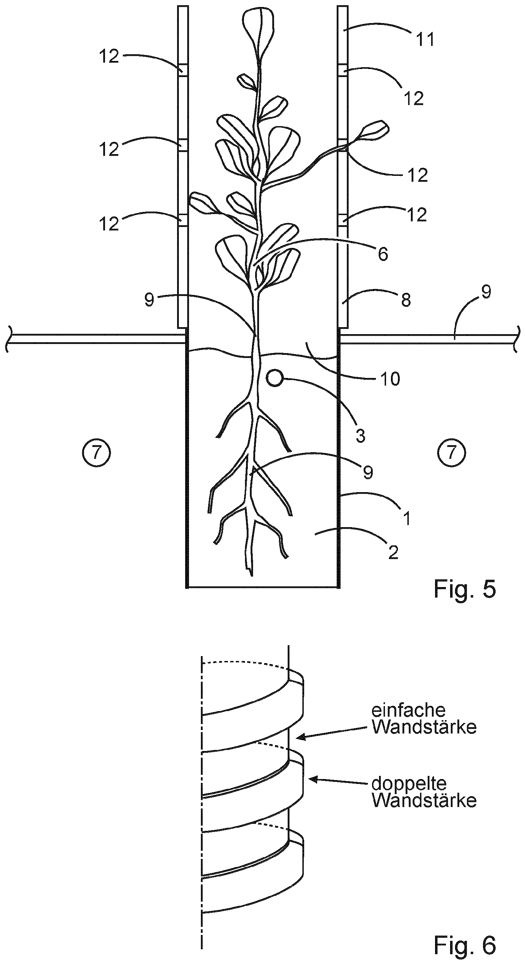

Wichtig ist hierbei, dass das Erdloch, in welches die Wurzelschutzhülle 1 eingesetzt wird, eine vorbestimmte Tiefe hat, damit die Oberseite des Substrats in etwa auf Höhe des umgebenen Erdbodens liegt - siehe Figur 5.

Bei der in Figur 5 dargestellten Variante ragt der obere Rand der Wurzelschutzhülle 1 mit einem vorbestimmten Abstand, aus dem Boden 7 heraus. Dieser Abstand bildet einen Kragen 8.

Wenn dieser Kragen 8 mehr als 5cm, vorzugsweise mehr als 10 - 15 cm aus dem Boden 7 herausragt, hat dies für die Pflanze auch den Vorteil, dass der Pflanzstengel 9 (Stamm) im bodennahen Bereich durch den umgebende Kragen 8 geschützt ist, und zwar sowohl gegen unmittelbares Begleitgrün, als auch gegen Mäuse. Da das Material der Wurzelschutzhülle 1, welches im Erdboden liegt, sich dann schneller abbaut als das Material, was oberhalb des Erdbodens liegt, also der Kragen 8, schützt dieser Kragen 8 und damit die Wurzelschutzhülle 1 die Jungpflanze in ihrer ersten Entwicklungszeit am Forstort und da insbesondere der Mäusefraß zu Beginn der Entwicklungszeit besonders fatal ist, wird dadurch der Ausfall der neuen Pflanzung verringert.

Da die Wurzelschutzhülle 1 außen besonders glatt ist und der Kragen 8 entsprechend hoch genug ist, können auch Mäuse, insbesondere die Rötelmaus, nicht die Wurzelschutzhülle 1 hochklettern, um dann an die Pflanze zu gelangen, insbesondere nicht den Teil der Pflanze, der besonders empfindlich ist, nämlich den unteren Stammbereich, der aus dem Erdboden wächst. Wird nämlich dieser Bereich einmal über den gesamten Umfang her abgenagt, ist in der Regel der Ausfall (Tod) der Pflanze zu erwarten.

Zur Verbesserung des Pflanzerfolgs ist es auch möglich, eine Baumschutzscheibe, bzw. Mulchplatte 9 aus dem im wesentlichen gleichen Material wie die Wurzelschutzhülle 1 sm Pflanzort auf den Erdboden zu bringen. Eine solche Baumschutzscheibe oder Mulchplatte 9 ist in Figur 5 dargestellt. Diese Baumschutzschreibe bzw. Mulchplatte 9 weist innenseitig den gleichen Querschnitt, in etwa auch den gleichen Innendurchmesser der Wurzelschutzhülle 1 auf, kann somit also leicht die Wurzelschutzhülle 1 gestülpt werden, bzw. die Wurzelschutzhülle kann ebenso leicht in die Öffnung 10 der Baumschutzscheibe / Mulchplatte 9 eingebracht werden. Der Aussendurchmesser der Mulchplatte 9 kann über 30 cm, auch über 50 cm betragen, kann vom Außenquerschnitt her kreisförmig, rechteckig, quadratisch, oval oder dergleichen ausgebildet sein.

Der Vorteil der dargestellten Lösung besteht auch darin, dass damit das Verdunsten von Feuchtigkeit rund um den Einpflanzort nochmals verringert wird und das Begleitgrün, also Wildkräuter, Unkräuter, etc., die das schnelle Wachstum der Jungpflanze stören oder verhindern können, solange die Pflanze mit ihrem Terminaltrieb noch nicht größer ist als 50 - 70 cm, abgehalten werden.

Wenn der Innendurchmesser 10 der Baumschutzscheibe bzw. Mulchplatte 9 passgenau auf den Außendurchmesser, bzw. die Außenkontur der Wurzelschutzhülle 1 im Bereich des Kragens 8 angepasst ist, also die Baumschutzscheibe bzw. Mulchplatte 9 eng an der Wurzelschutzhülle 1 anliegt, verhindert dies auch ein Wegwehen der Baumschutzscheibe / Mulchplatte 9 durch Wind. Durch die Einlassung von kleinen Bohrungen, Poren, etc. in die Baumschutzscheibe bzw. Mulchplatte 9, ist es auch ohne weiteres möglich, dass auch Regenwasser von oben durch diese Scheibe in den Wachstumsbereich der Pflanze gelangt.

In Figur 5 ist als weitere mögliche Ergänzung der Aufsatz eines Wildverbissschutzes 11 gezeigt. Auch das Material dieses Wildberbissschutzes 11 besteht, wie die Wurzelschutzhülle 1, als auch die Baumschutzscheibe bzw. Mulchplatte 9, aus dem bereits erwähnten homekompostierbaren Material.

Der Innendurchmesser dieses Wildverbissschutzes 11, welcher ebenfalls eine Rohrstruktur aufweist, ist dem Außendurchmesser der Wurzelschutzhülle 1 im Bereich des Kragens 8 angepasst, kann somit über die Wurzelschutzhülle 1 bzw. deren Rohrstruktur gestülpt werden. Dies hat einerseits den Vorteil, dass damit auch die Baumscheibe, bzw. Mulchplatte 9 noch besser am Boden fixiert wird, andererseits hat dies den Vorteil, dass der Wildverbissschutz 11 selbst auch durch den Kragen 8 der Wurzelschutzhülle 1 an diesen fixiert werden kann.

Der Wildverbissschutz 11 selbst weist außenseitig Öffnungen 12 auf, durch die Licht ins Innere gelangen kann und auch kleine Seitenäste der Jungpflanze 6 nach außen wachsen können.

Wie aufgezeigt, kann letztlich eine Baumscheibe und/oder Mulchplatte 9 über die Wurzelschutzhülle gestülpt werden und gleiches gilt auch für den Wildverbissschutz 11 und seiner rohrförmigen Struktur, welcher nach dem Überstülpen entweder außen am Kragen der Wurzelschutzhülle oder innenseitig am Kragen der Wurzelschutzhülle anliegt und somit von dieser gehalten wird.

Auf Grund der Ausbildung des Wildverbissschutzes 11 aus kompostierbarem Material wird der Wildverbissschutz 11 auf natürlichem Wege abgebaut, der Abbau braucht regelmäßig an der Luft jedoch länger als im Erdboden. Dies ist aber weniger störend, denn der Seiten- und Verbissschutz für die junge Pflanze darf gerne 2 bis 4 Jahre bestehen bleiben.

Die dargestellte Ausführung des Wildverbissschutzes 11 hat wiederum den Vorteil, dass auch dadurch Mäusefraß erfolgreich verhindert werden kann und somit als weitere Maßnahme gegen den Ausfall der Neuanpflanzung erfolgreich gebildet werden kann.

Die Länge des Wildverbissschutzes 11 sollte im Bereich von etwa 70 bis 120 cm liegen.

Die Ausführung nach Figur 5 ist eine Kombination/ein System von drei Elementen, also der Wurzelschutzhülle 1, der Baumschutzscheibe bzw. Mulchplatte 9 und dem Wildverbissschutz 11. Es ist auch möglich, den Aufbau ohne die Baumschutzscheibe 9 zu bilden. Ebenfalls ist es möglich bei dem System die Wurzelschutzhülle nur mit der Baumschutzscheibe bzw. Mulchplatte 9 auszubilden, ohne den Wildverbissschutz 11.

Wenn der Wildverbissschutz 11 selbst nicht in einer Natur-, sondern eher Leuchtfarbe gestaltet wird, hat dies den Vorteil, dass bei Mäharbeiten rund um den Pflanzort die Pflanze selbst besser erkannt werden kann und somit nicht aus Versehen mit abgemäht wird.

Wenn der Wildverbissschutz 11 oberseitig, also wenigsten an seinem oberen Ende, mit einer Leuchtsignalfarbe versehen, z. B. einer abbaubaren Forstfarbe besprüht ist oder dergleichen, hat dies wiederum den Vorteil, dass mit einem relativ einfachen Blick der Forstmann sehen kann, an welchem Ort Pflanzen stehen und er kann dann auch, ohne jede einzelne Pflanze angehen zu müssen, im Übrigen sehr gut sehen, wie stark sich wann der Wildverbissschutz 11 abgebaut hat und ob es dann noch weitere Schutzmaßnahmen geben muss, wenn dies der Fall ist.

Wenn der Wildverbissschutz 11 wenigstens oberseitig mit einer Leuchtfarbe versehen ist, kann auch durch einfache Fotografie, z. B. mit einem Smartphone, das Pflanzergebnis fotografisch festgehalten werden und wäre auch durch einen entsprechenden Kameraeinsatz per Drohne beobachtbar.

Die Abbaubarkeit der Baumschutzscheibe bzw. Mulchplatte 9 und des Wildverbissschutz 11 hängt von den grundsätzlich gleichen Kriterien ab wie die Abbaubarkeit der Wurzelschutzhülle 1, also z. B. Wandstärke, Materialzusammensetzung, Zusatz von Additiven / Stabilisatoren, etc., wobei zu beachten ist, dass der Wildverbissschutz 11 im Wesentlichen nicht von Erdmaterial umgeben ist, und sich somit in einer anderen Umgebung befindet, wie der unterirdische Teil der Wurzelschutzhülle 1. Gleichzeitig wirkt auf den Wildverbissschutz 11 wie auch auf die Baumschutzscheibe bzw. Mulchplatte 9 die ultraviolette Strahlung der Sonne ein, was wiederrum regelmäßig auch zur Beschleunigung des Materialabbaus führt, bzw. das Material regelmäßig jedenfalls spröder macht.

Durch die erfindungsgemäße Wurzelschutzhülle wäre es nicht nur möglich, junge Pflanzen am Forstort besser vor dem Austrocknen zu schützen und die Gehölzpflanzenkeime oder die jungen Gehölzpflanzen mit dem unverletzten Hauptwurzelsystem in den Boden am Forstort zu bringen, sondern die gesamte Entwicklung der Wurzelanlage, insbesondere der Pfahlwurzelanlage wird die Bepflanzung in der frostfreien Vegetationsperiode verbessern.

Erste Versuche zeigen, dass insbesondere das Pflanzwachstum am Anfang, also nach der Keimung aufgrund der idealen Feuchtigkeitsbedingungen beschleunigt wird, was die Zeit bis zur Verpflanzung am Forstort verkürzt und wenn insgesamte die Effizienz, also die Ausfallrate der Jungpflanzen minimiert werden kann, führt dies zu einer saatgutsparenden Pflanzbegrünung, was insbesondere dann, wenn relativ wenig Saatgut zur Verfügung steht, es möglich macht, mehr und größere Flächen neu zu bepflanzen.

Wie bereits erwähnt, sind die Substrate, die für eine solche Wurzelschutzhülle eingesetzt werden sollen bekannt, z. B. wassergesättigtes Roh-Sphagnum.

Der homekompostierbare Kunststoff lässt sich hinsichtlich seiner Biodegradierung relativ genau einstellen, das heißt, dass mit relativ guter Genauigkeit gesagt werden kann, bis wann das Material erste Brüche aufweist und sich letztlich bis zu einem bestimmten Prozentsatz oder zur Gänze aufgelöst hat, wobei dies keine Rückstände, insbesondere keine schädlichen Rückstände für den Boden und die Jungpflanze bedeutet.

In den ersten Versuchen hat sich bereits aufgezeigt, dass mit dem home-kompostierbaren Material die Wurzelschutzhülle, Mulchplatte und der Verbissschutz auch in einem industriellen Prozess zu akzeptablen Kosten herstellbar ist.

Erfindungsgemäß kann aus den Wurzelschutzhüllen auch ein Gebinde aus einer vorbestimmten Anzahl von Wurzelschutzhüllen gebildet werden, wobei dabei die einzelnen Wurzelschutzhüllen durch eine Struktur miteinander verbunden sind, z. B. eine Lochplatte mit 5x3, 5x5, oder 6x8 Löchern, wobei die Lochplatte selbst auch aus einem homekompostierbarem, erdabbaubarem Kunststoff bestehen kann und Bruchstellen, z. B. durch Perforation, aufweisen kann, um somit das Ablösen einer Wurzelschutzhülle das Ende leicht auflösen zu können.

Die Lochplatte weist dabei bevorzugt Löcher mit einer Geometrie auf, die an die große Geometrie der Wurzelschutzhüllen und auch an deren Außendurchmesser angepasst ist.

Das Gebinde hat dabei besonders den Vorteil, dass die einzelnen Wurzelschutzhüllen besser fixiert werden und somit nicht umfallen können und dann auch auf einem Gebinde an einer Platte, Palette oder dergleichen leichter transportabel ist, z. B. auch zum Transport am Forstort.

Alternativ zu einer homekompostierbaren Lochplatte zur Aufnahme der Wurzelschutzhüllen ist es auch möglich, dass die Platte aus Metall oder einem konventionellen Kunststoff, oder auch aus Holz besteht und eine entsprechende Lochstruktur aufweist, wobei dann am Pflanzort dann die einzelnen Wurzelschutzhüllen aus dem Gebinde herausgenommen werden, um verpflanzt zu werden.

Wie ausgeführt, kann die Wurzelschutzhülle über ihre Länge und/oder im Umfang ungleiche Wandstärken aufweisen.

Dies lässt sich durch verschiedene Maßnahmen bewerkstelligen, z. B. wenn die Wurzelschutzhülle aus einem Wandmaterial entwickelt wird, welches zu einer Wurzelschutzhülle aufgewickelt wird, wobei dann im überlappenden Bereich, also dort, wo sich die aufeinanderliegenden Bänder berühren (und in bekannter Weise miteinander verbunden werden können, z. B. verklebt), eine doppelte Wandstärke ausbreitet als im Vergleich zu dem Bereich, wo eine solche Überlappung nicht stattfindet.

Solch eine Ausführungsform ist in Figur 6 gezeigt. Dort wird ein circa 2 cm breiter Strang zunächst um ein Rohr gewickelt, sodass sich die Kanten immer um einen vorbestimmten Bereich überlappen. Wenn der Kunststoff dann noch warm ist, werden die Kanten dabei gleichzeitig verklebt und haften aneinander. Daraus resultiert dann, dass die Wandstärke abwechselnd dicker oder dünner ist. Dies stärkt einerseits die Stabilität der Wurzelschutzhülle sowohl in der Längsausrichtung, als auch bei dem Umfang, wodurch dann die Seitenwurzeln an den dünnen Stellen schneller aus der Wurzelschutzhülle ausbrechen und in das benachbarte Erdreich einwachsen können.

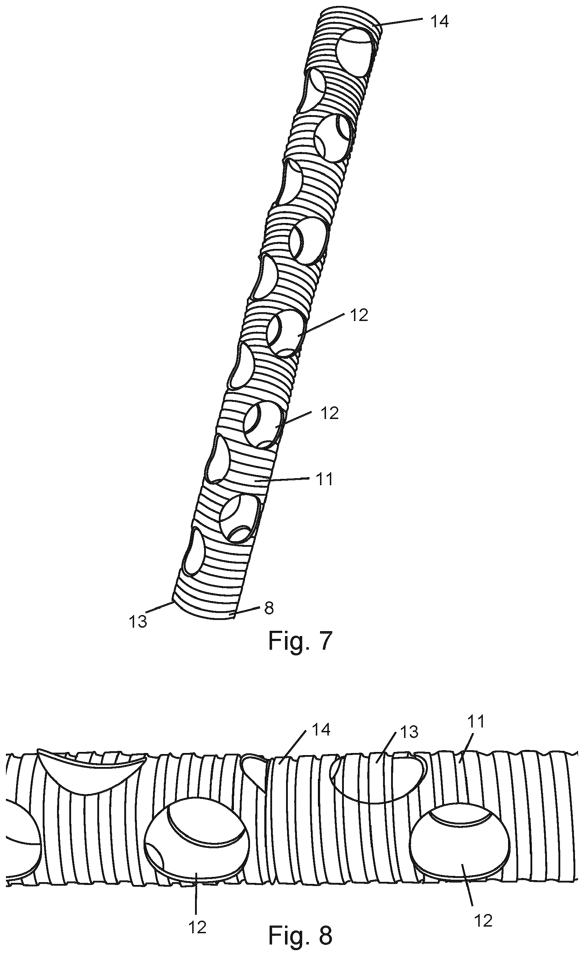

Figur 7 zeigt einen Wildverbisschutz 11 mit einer Rohrstruktur, an welcher Außenseite Löcher 12 eingelassen sind, damit Licht an die junge Pflanze gelangen kann und gleichwohl auch Äste in diesem Bereich sich nach draußen außerhalb der Verbissschutzhülle 11 entwickeln können.

Die in Figur 7 gezeigte Verbissschutz wird hergestellt durch das Aufwickeln eines 1 bis 2 cm breiten Bandes aus dem home-kompostierbarem Material, wobei durch das Aufwickeln eine formstabile Rohrstruktur gebildet wird und dies lässt eine "Endlosproduktion" zu, soweit das Bandmaterial zur Verfügung steht, wobei auch die Bandenden aneinandergeklebt werden können.

Bei der Ausbildung der Rohrstruktur wird dann immer die gewünschte Rohrlänge abgeschnitten und dann werden in die Rohrstruktur die gewünschten Öffnungen 12, wie im dargestellten Bild Löcher (oder Schlitze), in der gewünschten Zahl, Ausbildung und Durchmesser/Geometrie eingebracht, z. B. durch Ausstanzen oder Schneiden.

Die gleiche Rohrstruktur ohne die großen Löcher kann dann auch gleichzeitig die Wurzelschutzhülle bilden, es ist also möglich, mit dem gleichen Material und dem gleichen Produktionswerkzeug sowohl die Grundstruktur für die Wurzelschutzhülle, wie auch für den Wildverbissschutz auszubilden, was eine sehr kostensparende Produktion möglich macht.

Die in Figur 7 gezeigte Verbissschutz-Hülle 11 ist noch hinreichend formstabil, plättet sich also nicht ab, wenn sie flach auf dem Boden liegt.

Je weniger Öffnungen 12, Löcher oder Schlitze, in die Rohrstruktur eingebracht werden, um so formstabiler ist dann die Struktur.

Gleichzeitig sind aber auch die Enden der in Figur 7 gezeigten Verbissschutzhülle flexibel genug, um übereinannder gestülpt/gesteckt zu werden, womit auch problemlos eine Verlängerung möglich ist, wenn zwei der in Figur 7 gezeigten Hüllen in einer vorbestimmten Länge übereinander gesteckt werden.

Auf die gleiche Art und Weise ist es auch möglich, die Verbissschutzhülle wie in Figur 7 auf den Kragen 8 einer Wurzelschutzhülle zu stecken, sodass bei der Verpflanzung oder nach der Verpflanzung die Wurzelschutzhülle, wie auch die Verbissschutzhülle ineinander gesteckt sind und ihre gewünschten Funktionen entfalten.

Wenn die beiden Enden 13, 14 der Wurzelschutzhülle 11 einerseits und der Verbissschutzhülle andererseits ineinandergesteckt werden, kommt es zu einem Verhaken der beiden Teile, sodass die Verbissschutzhülle sicher in der Wurzelschutzhülle steckt. Dies ist in Figur 8 gezeigt.

## Patentansprüche

1. Wurzelschutzhülle mit einem im Wesentlichen kreisförmigen, ovalen, rechteckigen, quadratischen oder mehreckigen Querschnitt, wobei die Hülle eine Rohrstruktur und Länge von mehr als 5 cm und die Hülle eine Wand mit einer vorbestimmten Wandstärke aufweist, welcher im Bereich von im Wesentlichen bei 0,3 mm - 5 mm liegt, vorzugsweise im Bereich von 1 mm - 3 mm, wobei das Material der Wurzelschutzhülle aus einem home- bzw. erdabbaubarem Kunststoff besteht, der gegebenenfalls einen vorbestimmten Anteil von Naturfasern, vorzugsweise Sonnenblumenschalenfasern enthält, wobei dieser Anteil der Naturfasern am Gesamtanteil bevorzugt höher ist als 10%, z. B. 10 % - 70 %.

2. Wurzelschutzhülle nach Anspruch 1, **dadurch gekennzeichnet, dass** der Durchmesser der Wurzelschutzhülle im Bereich von 3 cm - 15 cm liegt.

3. Wurzelschutzhülle nach einem der vorhergehenden Ansprüche, **dadurch gekennzeichnet, dass** die Haltbarkeit der Wurzelschutzhülle im Erdreich zwischen 3 Monaten und 6 Jahren beträgt und die Haltbarkeit über Stabilisatoren/Additiv im Material der Wurzelschutzhülle und/oder die Wandstärke der Wurzelschutzhülle und/oder die Auswahl der Naturfaser einstellbar ist.

4. Wurzelschutzhülle nach einem der vorhergehenden Ansprüche, **dadurch gekennzeichnet, dass** das Material der Wurzelschutzhülle ein Verbundmaterial aus Polybutylensuccinat (PBS) und/oder Polybutylensuccinat-Co-Adipat (PBSA) enthält.

5. Wurzelschutzhülle nach einem der vorhergehenden Ansprüche, **dadurch gekennzeichnet, dass** die Wurzelschutzhülle durch eine Extrusion, in der Wicklung, im Spritzguss oder durch Tiefziehen hergestellt wird.

6. Wurzelschutzhülle nach einem der vorhergehenden Ansprüche, **dadurch gekennzeichnet, dass** die Wurzelschutzhülle über die Länge hin eine gleichbleibende oder alternierende Wandstärke aufweist und/oder die Wurzelschutzhülle im vorbestimmten Bereich Schlitze und/oder Öffnungen mit einer vorbestimmten Geometrie aufweist.

7. Verfahren zum Vorkultivieren von Forstgehölzen mittels einer Wurzelschutzhülle nach einem der vorhergehenden Ansprüche, **dadurch gekennzeichnet, dass** in die Wurzelschutzhülle ein wasserspeicherndes Substrat und ein Gehölzpflanzsaatkorn, zum Beispiel eine Eichel, eine Buchecker, ein Saatkorn des Nadelbaums, eine Nuss oder dergleichen eingebracht wird, wobei das Gehölzpflanzsaatkorn an einer vorbestimmten Stelle des Substrats abgelegt wird, z. B. auf dem Substrat oder einem bestimmten Abstand unterhalb der Oberfläche des Substrats.

8. Verfahren nach Anspruch 6, **dadurch gekennzeichnet, dass** das Gehölzpflanzsaatkorn vorbehandelt ist, um die Keimfähigkeit und/oder Keimfreudigkeit zu erhöhen.

9. Verfahren nach Anspruch 8, **dadurch gekennzeichnet, dass** das Gehölzpflanzsaatgut durch eine Stratifikation und/oder eine Verletzung und eine Trockenbehandlung und/oder Feuchtbehandlung und/oder Temperaturbehandlung und/oder Beize und/oder einem weiteren Verfahren vorbehandelt wird.

10. Gebinde aus einer vorbestimmten Anzahl von Wurzelschutzhüllen nach einem der vorhergehenden Ansprüche, wobei das Gebinde eine vorbestimmte Struktur aufweist, z. B. aus einem quadratischen oder rechteckigen Verband von Wurzelschutzhüllen besteht, z. B. 5x3, 5x5, 6x8 oder dergleichen Wurzelschutzhüllen, wobei die Wurzelschutzhüllen mit benachbarten Wurzelschutzhüllen verbunden sind, sei es durch eine Lochplatte, um die einzelnen Wurzelschutzhüllen aufzunehmen, oder die Wurzelschutzhüllen sind an ihrem oberen Rand oder im Bodenbereich der Wurzelschutzhüllen miteinander verbunden, z. B. verklebt, verrastet oder dergleichen und vorzugsweise derart verbunden, dass sie mit einem relativ geringen Losberechmoment aus dem Gebinde lösbar sind.

11. Gebinde nach Anspruch 9, **dadurch gekennzeichnet, dass** sich benachbarte Wurzelschutzhüllen über eine vorbestimmte Länge berühren, vorzugsweise über eine Teillänge von wenigstens 30% ihrer Gesamtlänge.

12. System, bestehend aus einer Wurzelschutzhülle nach einem der vorhergehenden Ansprüche, einer Baumschutzscheibe bzw. Mulchplatte (9), die eine Öffnung aufweist, in welche die Wurzelschutzhülle einsteckbar bzw. positionierbar ist und/oder mit einem Wildverbissschutz (11) verbindbar ist, der eine im Wesentlichen rohrförmige Struktur aufweist, auf welche eine vertikale Verlängerung auf diesen schiebbar und/oder steckbar ist.

13. Wurzelschutzhülle nach einem der vorhergehenden Ansprüche mit einer Mehrzahl von Öffnungen (12) und zur Verwendung als Wildverbissschutz (11).
